**Europäisches Patentamt**

**European Patent Office**

**Office européen des brevets**

(11) Numéro de publication : **0 292 378 B1**

## (12) FASCICULE DE BREVET EUROPEEN

(45) Date de publication du fascicule du brevet :
**11.03.92 Bulletin 92/11**

(51) Int. Cl.$^5$ : **B65G 47/51**

(21) Numéro de dépôt : **88401196.6**

(22) Date de dépôt : **18.05.88**

(54) **Dispositif de stockage d'objets.**

(30) Priorité : **22.05.87 FR 8707545**

(43) Date de publication de la demande :
**23.11.88 Bulletin 88/47**

(45) Mention de la délivrance du brevet :
**11.03.92 Bulletin 92/11**

(84) Etats contractants désignés :
**AT BE CH DE ES FR GB GR IT LI LU NL SE**

(56) Documents cités :
**BE-A- 626 027**
**DE-A- 2 548 613**
**FR-A- 2 338 859**
**FR-A- 2 510 527**
**GB-A- 2 097 744**

(73) Titulaire : **S.I.E.R.E.M. SARL**
**134 rue de Lille**
**F-59338 Tourcoing Cédex (FR)**

(72) Inventeur : **Remericq, Maurice**
**117 rue Saint Joseph**
**F-59166 Bousbecque (FR)**

(74) Mandataire : **Ecrepont, Robert**
**CABINET ECREPONT ROBERT 12, Place**
**Simon Vollant**
**F-59800 Lille (FR)**

## Description

L'invention se rapporte à un dispositif de stockage d'objets qui permet d'absorber des différences de débit de deux ensembles entre lesquels il est installé.

On connait déjà de tels dispositifs (FR-A-2.338.859 et 2.510.527) qui comprennent chacun dans leur bâti au moins un lien sans fin portant une succession de réceptacles pouvant chacun à un poste de chargement être chargé des objets provenant d'un des ensembles et à un poste de déchargement être déchargé de ses objets par transfert sur l'autre ensemble.

Entre ces ensembles, sur la partie dite active du parcours de ce lien allant du poste de chargement au poste de déchargement, le lien passe sur au moins un organe de renvoi délimitant sur le dit lien un brin venant du poste de chargement et un brin allant au poste de déchargement.

Sur chacun des brins agit un des deux moyens moteurs distincts prévus à cet effet de manière à pouvoir faire avancer les deux brins à des vitesses relatives différentes que ces avances soient continues ou séquentielles.

L'organe de renvoi est monté sur un axe mobile selon une direction sécante à une ligne fictive reliant les postes de chargement et de déchargement de manière à pouvoir absorber les différences de longueur de la partie active du parcours, lesquelles différences de longueur sont dues à une différence de vitesse des brins allant et venant.

Dans les réalisations connues, pour assurer la mobilité de l'axe, celui-ci est avec son lien et ses réceptacles suspendu à un lien secondaire lui-même passé sur une poulie de renvoi avant d'être associé à un contrepoids exerçant sur l'axe et les éléments qu'il supporte une traction légèrement supérieure à leur poids.

Dans l'une des réalisations connues (FR-A-2.338.859) sur la partie inactive du parcours du lien , celui-ci passe sans tension sur un second organe de renvoi dont l'axe est relié à l'axe du précédent organe de renvoi par une bretelle réalisant un support mobile avec l'axe sur lequel agit le contrepoids et l'ensemble n'est positionné entre les moyens moteurs que par son propre poids.

Dans une autre réalisation connue (FR-A-2.510.527) d'une part seule la partie supérieure de la partie inactive du parcours du lien est éventuellement passée sur divers organes de renvoi et quoiqu'il en soit au moins dans la partie inférieure de la partie inactive de son parcours, ce lien est laissé libre et d'autre part, seul l'organe de renvoi du lien dans la partie active de son parcours bénéficie d'un relatif guidage.

Il résulte de ces dispositions que ces dispositifs de stockage ne peuvent convenir lorsque le parcours du lien sans fin portant les réceptacles doit se situer dans un plan au moins sensiblement horizontal par exemple parce que les objets constituant les lots ne peuvent pas se maintenir en piles.

Par ailleurs, à moins de dévier le lien de manière à l'enrouler sur les moyens moteurs sur un angle d'environ 90°, ce qui augmenterait fortement l'encombrement de l'ensemble, les dits moyens moteurs qui peuvent se dégager du lien ont un rendement médiocre et il en résulte des défauts dans l'ajustement des vitesses d'avance des brins allant et venant.

Un des résultats que l'invention vise à obtenir est un dispositif de stockage dont le parcours du lien peut se situer dans un plan horizontal.

Un autre résultat que l'invention vise à obtenir est un dispositif de stockage tolérant des défauts dans l'ajustement des vitesses d'avance des brins allant et venant.

A cet effet, elle a pour objet un dispositif du type précité notamment caractérisé en ce que :

– au moins le brin venant du poste de chargement est, à hauteur du poste de chargement dévié vers le dit poste par au moins un organe de renvoi et
– les organes de renvoi et les receptacles sont conçus de manière, d'une part, au moins au niveau du poste de chargement, à ouvrir les logements délimités entre les réceptacles et, d'autre part, en aval du poste de chargement, à refermer les logements, et ce faisant, à pincer les objets introduits dans les dits logements.

L'invention sera bien comprise à l'aide de la description ci-aprés faite à titre d'exemple non limitatif en regard du dessin ci-annexé qui représente schématiquement :

– figure 1 : le dispositif avec le parcours de son lien vu en plan,

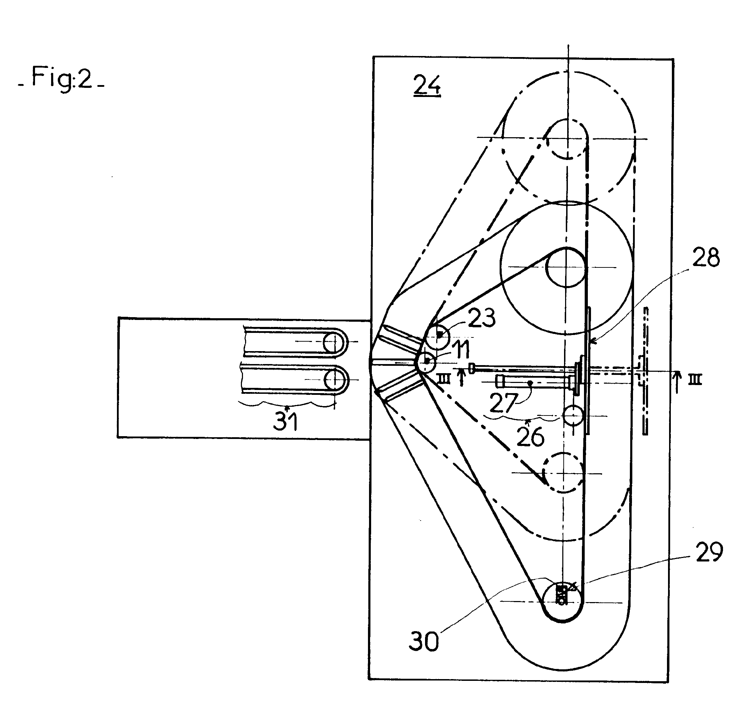

– figure 2 : une variante de réalisation du dispositif de la figure 1,

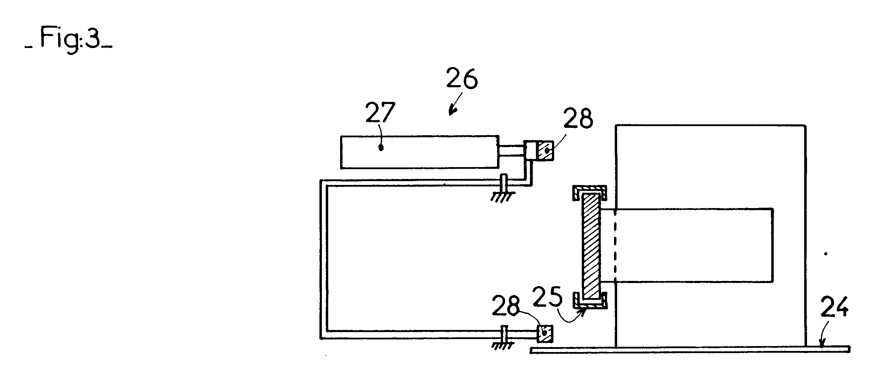

– figure 3 : une coupe selon III-III de la figure 2.

En se reportant au dessin, on voit un dispositif de stockage d'objets 1 comprenant dans un bâti 2 au moins un lien 3 sans fin portant une succession de réceptacles 4 pouvant chacun être chargé à un poste de chargement 5 et déchargé à un poste de déchargement 6 entre lesquels :

– sur la partie 7 dite active du parcours de ce lien allant du poste de chargement 5 au poste de déchargement, le lien passe sur au moins un organe de renvoi 8 délimitant sur le lien un brin 9 venant du poste de chargement et un brin 10 allant au poste de déchargement,
– sur chacun desquels brins 9, 10 agit un des deux moyens moteurs distincts 11, 12 prévus à cet effet de manière à pouvoir faire avancer les deux brins à des vitesses sensiblement différentes que ces avances soient continues ou séquentielles,
– lequel organe de renvoi 8 est monté sur un axe

13 mobile selon une direction "D" sécante à une ligne "L" fictive reliant les postes de chargement et de déchargement de manière à pouvoir absorber les différences de longueur de la partie active 7 du parcours du lien, lesquelles différences de longueur sont dues à une différence de vitesse des brins allant et venant,

– sur la partie inactive 14 du parcours du lien , celui-ci passe sur un second organe de renvoi dont l'axe 15 est relié à l'axe 13 du précédent organe de renvoi par un support 16 mobile avec l'axe 13 du premier organe de renvoi 8.

Le dispositif comprend en combinaison :

– un support 16 sur lequel sont montés tant l'organe de renvoi 8 scindant la partie active du parcours du lien en deux brins qu'au moins un autre organe de renvoi 17,

– un moyen 18 de maintien sous tension du lien, tout au long de son parcours,

– associé au bâti 2, un moyen 19 de guidage en translation du support 16 précité selon la direction "D" sécante à la ligne fictive "L" passant par les postes de chargement et de déchargement,

– au moins l'un des moyens moteurs est pourvu d'un moyen 20 de maintien du lien en prise avec le dit moyen moteur, lequel moyen de maintien est associé à l'un des éléments que sont le support 16 et le bâti 2.

Avantageusement, le lien consiste en une chaine aux maillons de laquelle sont fixés les réceptacles.

La combinaison de l'action des moyens 18 de la tension du lien et des moyens 20 de maintien du lien en prise avec les moyens moteurs garantit un rendement optimum de la commande des brins allant et venant et donc le respect du différentiel de vitesse qui est nécessaire pour ainsi absorber parfaitement les différences de débit entre les deux ensembles 21, 22 entre lesquels le dispositif est installé.

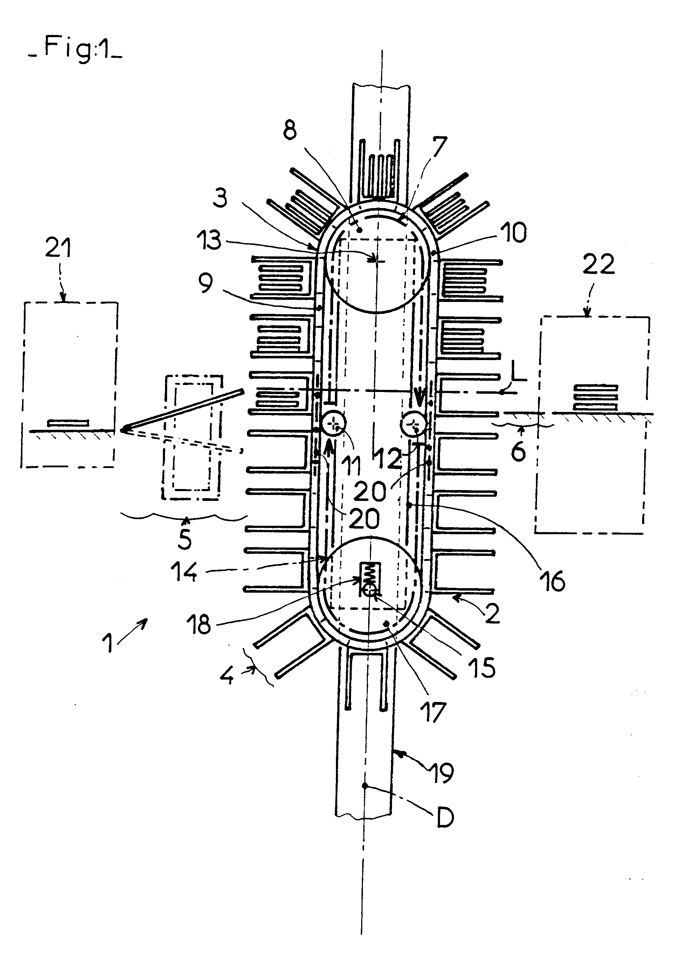

Dans une première forme de réalisation, les brins allant et venant sont sensiblement parallèles (figure 1).

Dans une variante de réalisation, les réceptacles sont des palettes rigidement fixées au lien avec la tangente auquel elle forme un angle de 90° et au moins le brin venant du poste de chargement est, à hauteur du poste de chargement dévié vers le dit poste par au moins un organe de renvoi 11, 23 de manière notamment au passage sur cet organe à ouvrir les logements délimités entre les réceptacles et à faciliter l'accés des objets jusqu'à l'intérieur des logements puis, lorsqu'il quitte cet organe, le lien se redressant, à refermer le logement pour pincer et maintenir fermement les objets.

Avantageusement, l'un de ces organes de renvoi déviant le lien est constitué par le moyen moteur 11 du brin correspondant qui bénéficie ainsi d'un contact plus important avec le dit lien. La combinaison des moyens de tension du lien et de maintien de celui-ci en prise avec le moyen moteur ainsi que du moyen de guidage en translation du support assure que celui-ci et le lien peuvent, sans nuire au fonctionnement, se déplacer même dans un plan sensiblement horizontal.

Les réceptacles peuvent dans ce cas consister en de simples palettes guidant les objets dans leur déplacement.

Pour supporter les objets, le dispositif comprend alors au moins sous le parcours des objets une table 24 parallèle au plan du lien.

De préférence, au moins localement le lien est engagé dans une glissière 25 déterminant avec précision le parcours du dit lien. Au poste de déchargement, le dispositif comprend au moins un poussoir 26 des objets, lequel poussoir comprend par exemple au moins un vérin 27 qui, de préférence aprés arrêt du brin correspondant, agit sur une traverse interchangeable 28 parallèle au lien et s'étendant sur une longueur déterminée en fonction du nombre de réceptacles à décharger.

Le moyen de maintien sous tension du lien comprend au niveau de l'un des organes de renvoi une glissière 29 portée par le support et guidant l'axe de cet organe de renvoi sur lequel agit un organe élastique 30.

Au poste de chargement, le dispositif comprend par exemple un tapis d'alimentation 31 débouchant devant l'entrée des réceptacles.

Des cellules (non représentées) contrôlent l'arrivée des objets dans les réceptacles et commandent l'avance pas à pas du brin correspondant.

De même, au poste de déchargement, des cellules contrôlent l'arrivée des premier et dernier objets du lot à réaliser avant d'arrêter le brin correspondant et de commander le transfert du lot, au terme duquel transfert l'avance du brin peut reprendre. Le dispositif d'extraction n'a donc pas à suivre le mouvement du brin.

**Revendications**

1. Dispositif de stockage d'objets (1) comprenant dans un bâti (2) au moins un lien (3) sans fin portant une succession de réceptacles (4) pouvant chacun être chargé à un poste de chargement (5) et déchargé à un poste de déchargement (6) entre lesquels :

– sur la partie (7) dite active du parcours de ce lien allant du poste de chargement (5) au poste de déchargement, le lien passe sur au moins un organe de renvoi (8) délimitant sur le lien un brin (9) venant du poste de chargement et un brin (10) allant au poste de déchargement,

– sur chacun desquels brins (9, 10) agit un des deux moyens moteurs distincts (11, 12) prévus à cet effet de manière à pouvoir faire avancer les deux brins à des vitesses sensiblement différen-

5 EP 0 292 378 B1 6

tes que ces avances soient continues ou séquentielles,

– lequel organe de renvoi (8) est monté sur un axe (13) mobile selon une direction (D) sécante à une ligne (L) fictive reliant les postes de chargement et de déchargement de manière à pouvoir absorber les différences de longueur de la partie active (7) du parcours du lien dues à une différence de vitesse des brins allant et venant,

– sur la partie inactive (14) du parcours du lien , celui-ci passe sur un second organe de renvoi dont l'axe (15) est relié à l'axe (13) du précédent organe de renvoi par un support (16) mobile avec l'axe (13) du premier organe de renvoi (8), ce dispositif comprenant en combinaison :

– un support (16) sur lequel sont montés tant l'organe de renvoi (8) scindant la partie active du parcours du lien en deux brins qu'au moins un autre organe de renvoi (17),

– associé au bâti (2), un moyen (19) de guidage en translation du support (16) précité selon la direction (D) sécante à la ligne fictive (L) passant par les postes de chargement et de déchargement,

– au moins l'un des moyens moteurs est pourvu d'un moyen (20) de maintien du lien en prise avec le dit moyen moteur, lequel moyen de maintien est associé à l'un des éléments que sont le support (16) et le bâti (2) et dont les réceptacles (4) sont des palettes rigidement fixées au lien avec la tangente auquel elle forme un angle de 90°, ce dispositif étant **CARACTERISE** en ce qu'au mains le brin venant du poste de chargement est, à hauteur du poste de chargement dévié vers le dit poste par au moins un organe de renvoi (11, 23) et en ce que les organes de renvoi (11, 23) et les receptacles (4) sont conçus de manière, d'une part, au moins au niveau du poste de chargement, à ouvrir les logements délimités entre les réceptacles et, d'autre part, en aval du poste de chargement, à refermer les logements, et ce faisant, à pincer les objets introduits dans les dits logements.

2. Dispositif selon la revendication 1 **caractérisé** en ce que l'un de ces organes de renvoi déviant le lien est constitué par le moyen moteur (11) du brin correspondant.

3. Dispositif selon la revendication 1 ou 2 **caractérisé** :

– en ce que les réceptacles consistent en de simples palettes guidant les objets dans leur déplacement et,

– en ce que ledit dispositif comprend, au moins sous le parcours des objets, une table (24) parallèle au plan du lien.

4. Dispositif selon l'une quelconque des revendications 1 à 3 caractérisé en ce qu'au moins localement le lien est engagé dans une glissière (24) déterminant avec précision le parcours du dit lien.

5. Dispositif selon l'une quelconque des revendications 1 à 4 caractérisé en ce qu'il comprend un moyen (18) de maintenu sous tension du lien tout au long de son parcours.

**Patentansprüche**

1. Vorrichtung zum Lagern von Gegenständen (1), die in einem Rahmen (2) mindestens ein endloses Verbindungsteil (3) aufweist, welches eine Reihe von Aufnahmeelementen (4) hintereinander trägt, die jeweils an einer Ladestation (5) beladen und an einer Entladestation (6) entladen werden können, wobei dazwischen

– auf dem sogenannten aktiven Abschnitt (7) der Wegstrecke dieses Verbindungsteils von der Ladestation (5) zur Entladestation das Verbindungsteil über ein Element (8) zur Umkehr der Laufrichtung läuft, welches auf dem Verbindungsteil ein von der Ladestation kommendes Trum (9) und ein zur Entladestation führendes Trum (10) abgrenzt,

– auf jedes der Trume (9, 10) eine von zwei voneinander getrennten Antriebseinrichtungen (11, 12) einwirkt, die zu diesem Zweck so vorgesehen sind, daß die beiden Trume mit im wesentlichen unterschiedlicher Geschwindigkeit kontinuierlich oder schrittweise angetrieben werden können,

– wobei das Element (8) zur Umkehr der Laufrichtung auf einer Achse (13) angeordnet ist, die in einer Richtung (D) beweglich ist, die sich mit einer gedachten Linie (L) schneidet, welche die Lade- und die Entladestation so miteinander verbindet, daß die Unterschiede in der Länge des aktiven Abschnitts (7) der Wegstrecke des Verbindungsteils aufgrund der unterschiedlichen Geschwindigkeit ausgeglichen werden können, mit welcher die Trume jeweils herangeführt und abgeführt werden,

– während auf dem inaktiven Abschnitt (14) der Wegstrecke des Verbindungsteils dieses über ein zweites Element (16) zur Umkehr der Laufrichtung läuft, dessen Achse (15) mit der Achse (13) des ersten Elements zur Laufrichtungsumkehr über einen Träger (16) so verbunden ist, daß sie mit der Achse (13) des ersten Elements (8) zur Umkehr der Laufrichtung beweglich ist, wobei diese Vorrichtung die folgenden Einrichtungen in Kombination aufweist:

– ein Tragelement (16), auf welchem sowohl das Element (8) zur Umkehr der Laufrichtung, welches den aktiven Abschnitt der Wegstrecke des Verbindungsteils in zwei Trume unterteilt, als auch mindestens ein weiteres Element (17) zur Umkehr der Laufrichtung angeordnet sind,

– eine dem Rahmen (2) zugeordnete Einrichtung (19) zur translatorischen Führung des vorgenannten Tragelementes in die Richtung (D) beweglich ist, die sich mit einer gedachten Linie (L) schneidet, welche durch die Lade - und die Entladestation verläuft,

– mindestens eine der Antriebseinrichtungen mit einer Einrichtung (20) versehen ist, welche das Verbindungsteil in Eingriff mit der Antriebseinrichtung hält und dem Tragelement (16) oder dem Rahmen (2) zugeordnet ist und dessen Aufnahmeelemente (4) starr mit dem Verbindungsteil verbundene Paletten sind, mit dessen Tangente ein Winkel von 90° gebildet wird, **dadurch GEKENNZEICHNET**, daß zumindest das von der Ladestation kommende Trum in Höhe der Ladestation zu dieser Station durch mindestens ein Umlenkteil (11, 23) umgelenkt wird, und daß die Umlenkteile (11, 23) und die Aufnahmeelemente (4) so ausgelegt sind, daß einerseits zumindest in Höhe der Ladestation die zwischen den Aufnahmeelementen begrenzten Aufnahmeräume geöffnet werden, und andererseits anlaufseitig von der Ladestation die Räume wieder verschlossen werden, und zwar unter Festspannen der in die Aufnahmeräume eingebrachten Gegenstände.

2. Vorrichtung nach Anspruch 1, **dadurch GEKENNZEICHNET**, daß eines der das Verbindungsteil umlenkenden Umlenkteile aus der Antriebseinrichtung (11) für das entsprechende Trum besteht.

3. Vorrichtung nach Anspruch 1 oder 2, **dadurch GEKENNZEICHNET,**

– daß die Aufnahmeelemente aus einfachen Paletten bestehen, welche die Gegenstände während ihres Transports führen, und

– daß die Vorrichtung zumindest unter der Wegstrecke der Gegenstände einen zur Ebene des Verbindungsteils parallelen Tisch (24) aufweist.

4. Vorrichtung nach einem der Ansprüche 1 bis 3, **dadurch GEKENNZEICHNET**, daß zumindest an einigen Stellen das Verbindungsteil in eine Gleitschiene (24) eingesetzt ist, welche die Wegstrecke des Verbindungsteils genau festlegt.

5. Vorrichtung nach einem der Ansprüche 1 bis 4, **dadurch GEKENNZEICHNET,** daß sie eine Einrichtung (18) aufweist, welche das Verbindungsteil über seine gesamte Wegstrecke in gespanntem Zustand hält.

**Claims**

1. A device (1) for storing objects comprising within a frame (2) at least one continuous belt (3) carrying a succession of receptacles (4) each of which can be loaded at a loading station (5) and unloaded at an unloading station (6) between which:
   – in one section (7) called the active section of the path of the belt extending from the loading station (5) to the unloading station (6), the belt passes over at least one reversing member (8) dividing the belt into one side (9) leading from the loading station and one side (10) leading to the unloading station ,
   – one of the two separate drive means (11, 12) acts upon each of said sides (9, 10), the drive means being provided so as to advance the two sides at appreciably different speeds whether these advances are continuous or sequential,
   – the reversing member (8) is mounted on an axis (13) which can be displaced in a direction (D) intersecting an imaginary line (L) connecting the loading and unloading stations so as to absorb the differences in length of the active section (7) of the path of the belt resulting from a difference in speed of the advancing and returning sides,
   – in the inactive section (14) of the path of the belt, the latter passes over a second reversing member whose axis (15) is connected to the axis (13) of the preceding reversing member by a support (16), which can be displaced with the axis (13) of the first reversing member (8), said device comprising in combination:
   – a support (16) on which are mounted both the reversing member (8) dividing the active section of the belt path into two sides and at least one other reversing member (17),
   – connected with the frame (2), a means (19) for guiding the movement of translation of the said support (16) in the direction (D) intersecting the imaginary line (L) passing through the loading and unloading stations,
   – at least one of the drive means is provided with a holding means (20) for keeping the belt engaged with the said drive means, said holding means (20) being associated with one of the elements which are the support (16) and the frame (2) and the receptacles (4) are pallets rigidly fixed to the belt forming an angle of 90° with the tangent to said belt, said device being characterised in that at least the side leading from the loading station is, at the level of the loading station, deflected towards said station by at least one reversing member (11, 23) and the reversing members (11, 23) and the receptacles (4) are designed in such a manner so as, on the one hand, at least at the level of the loading station, to open the seats defined between the receptacles and, on the other hand, downstream of the loading station, to close the seats, and in so doing grasp the objects introduced into said seats.

2. A device according to claim 1, characterised in that one of the reversing members deflecting the belt is formed by the drive means (11) of the corresponding side.

3. A device according to claim 1 or 2, characterised in that
- the receptacles are formed by simple pallets guiding the objects in their displacement and
- the said device comprises, at least below the path of the objects, a table (24) parallel to the plane of the belt.

4. A device according to any one of claims 1 to 3, characterised in that at least locally the belt is engaged in a slide (24) determining with precision the path of said belt.

5. A device according to any one of claims 1 to 4, characterised in that it comprises a means (18) for holding the belt under tension along its entire path.

_Fig:1_

- Fig.2 -

- Fig.3 -